(19)

**Europäisches Patentamt**

**European Patent Office**

**Office européen des brevets**

(11)  **EP 4 776 118 A1**

(12)  **EUROPEAN PATENT APPLICATION**

(43) Date of publication:
**15.07.2026 Bulletin 2026/29**

(21) Application number: **26151354.3**

(22) Date of filing: **12.01.2026**

(51) International Patent Classification (IPC):
**G06F 7/72** (2006.01)     **G06F 17/14** (2006.01)
**G06F 17/16** (2006.01)

(52) Cooperative Patent Classification (CPC):
**G06F 7/722; G06F 17/14; G06F 17/141;
G06F 17/142; G06F 17/144; G06F 17/16**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.01.2025 CN 202510045361**

(71) Applicant: **Zhejiang Ant Misuan Technology Co.,
Ltd.
Hangzhou City, Zhejiang Province 310023 (CN)**

(72) Inventors:
• **ZHOU, Zhen
Hangzhou, Zhejiang, 310000 (CN)**
• **TANG, Xin
Hangzhou, Zhejiang, 310000 (CN)**
• **YANG, Chen
Hangzhou, Zhejiang, 310000 (CN)**
• **WANG, Zihang
Hangzhou, Zhejiang, 310000 (CN)**
• **WANG, Jianfei
Hangzhou, Zhejiang, 310000 (CN)**

(74) Representative: **Winter, Brandl - Partnerschaft
mbB
Alois-Steinecker-Straße 22
85354 Freising (DE)**

(54)  **METHODS FOR PERFORMING TARGET TRANSFORMATIONS, ACCELERATION HARDWARE, AND POLYNOMIAL MULTIPLIERS**

(57)     A Method for performing a target transformation by using acceleration hardware is provided.. The transformation operation of the $i^{th}$ stage includes: respectively readinga first data pair and a second data pair from a first read address and a second read address in the memory at an $(i-1)^{th}$ stage; performing a first rearrangement operation on the first data pair and the second data pair, to output a third data pair and a fourth data pair; performing a radix-2 butterfly operation on the third data pair and the fourth data pair, to output a first result pair and a second result pair; performing a second rearrangement operation on the first result pair and the second result pair, to obtain a fifth data pair and a sixth data pair; and respectively writing the fifth data pair and the sixth data pair into a first write address and a second write address in the memory at the $i^{th}$ stage.

FIG. 1

## Description

### TECHNICAL FIELD

One or more embodiments of this disclosure relate to optimization of hardware for accelerating a target transformation, and in particular, to accelerating a target transformation and polynomial multiplication by using in-pair storage and rearrangement of data.

### BACKGROUND

Fast Fourier transform (FFT, Fast Fourier Transform) and fast number-theoretic transform (NTT, Number-Theoretic Transform) are the most key steps for accelerating polynomial multiplication, and have very broad application scenarios in the communication and encryption fields. For example, FFT implements conversion between a time domain and a frequency domain during digital signal processing, and NTT and negative wrapped convolution (NWC) using NTT accelerate polynomial multiplication in a finite field in a fully homomorphic hardware acceleration chip design.

In particular, with continuous progress of quantum computers, a high-efficient quantum algorithm can resolve mathematical problems on which mainstream public-key cryptographic systems such as RSA and ECC depend, resulting in threatening security of these cryptographic systems. Therefore, development of a more secure post-quantum cryptographic system becomes a new research focus. An objective of post-quantum cryptography (PQC, Post-Quantum Cryptography) is to ensure security when an attacker owns a large quantum computer. Currently, most existing post-quantum password solutions are mainly based on a lattice theory, and polynomial multiplication usually becomes a main calculation bottleneck in these solutions. To accelerate a calculation speed of the polynomial multiplication, NTT is widely applied, and can reduce time complexity from $O(n^2)$ to $O(n\log_2(n))$.

In the foregoing various calculation scenarios, efficiency of the polynomial multiplication or efficiency of an FFT or NTT operation included in the polynomial multiplication is an important factor of calculation performance.

Therefore, an improved solution is expected to improve a speed of the polynomial multiplication or a speed of the FFT operation or the NTT operation included in the polynomial multiplication, thereby improving the calculation performance in a related application scenario.

### SUMMARY

One or more embodiments of this disclosure describe a solution of performing a target transformation by using acceleration hardware. In this solution, execution of the target transformation is accelerated through in-pair storage and rearrangement of data, and running performance of the target transformation and corresponding polynomial multiplication is improved.

According to a first aspect, a method for performing a target transformation by using acceleration hardware is provided. The target transformation includes transformation operations of N stages, the acceleration hardware includes N circuit parts corresponding to the N stages, wherein an $i^{th}$ circuit part corresponding to any $i^{th}$ stage other than a first stage and a last stage includes a controller, a processing engine, a memory, a first rearrangement unit, and a second rearrangement unit, and the transformation operation of the $i^{th}$ stage includes:

   respectively reading, by the controller, a first data pair and a second data pair from a first read address and a second read address in the memory at an $(i-1)^{th}$ stage;
   performing, by the first rearrangement unit, a first rearrangement operation on the first data pair and the second data pair, to sequentially output a third data pair and a fourth data pair;
   sequentially performing, by the processing engine, a radix-2 butterfly operation on the third data pair and the fourth data pair, to sequentially output a first result pair and a second result pair;
   performing, by the second rearrangement unit, a second rearrangement operation on the first result pair and the second result pair, to obtain a fifth data pair and a sixth data pair; and
   respectively writing, by the controller, the fifth data pair and the sixth data pair into a first write address and a second write address in the memory at the $i^{th}$ stage.

In an embodiment, the target transformation is performed for an n-point input sequence, wherein n is 2 to the power of N, the memory at the $i^{th}$ stage stores, in pairs by using consecutive n/2 addresses, n results obtained through the transformation operation of the $i^{th}$ stage performed on the n-point input sequence, and values of the first read address and the second read address are respectively the same as values of the first write address and second write address.

In an embodiment, the second read address and the second write address are respectively the first read address and the first write address plus 2 to the power of i-1.

In an embodiment, the second read address and the second write address are respectively the first read address and the first write address plus 2 to the power of N-i-2.

In an embodiment, in the transformation operation of the $i^{th}$ stage, the n/2 addresses are sequentially evenly divided into $2^{N-i-1}$ groups; and the transformation operation of the $i^{th}$ stage further includes:

respectively reading, by the controller, data from a third read address and a fourth read address in the memory at the $(i-1)^{th}$ stage in two consecutive clock cycles after reading the second data pair, where
if the second read address is a last address in the group, the third read address is the second read address plus 1; or if the second read address is not a last address in the group, the third read address is the first read address plus 1; and the fourth read address is the third read address plus 2 to the power of i-1.

In an embodiment, in the transformation operation of the $i^{th}$ stage, the n/2 addresses are sequentially evenly divided into $2^i$ groups; and the transformation operation of the $i^{th}$ stage further includes:

respectively reading, by the controller, data from a third read address and a fourth read address in the memory at the $(i-1)^{th}$ stage in two consecutive clock cycles after reading the second data pair, where
if the second read address is a last address in the group, the third read address is the second read address plus 1; or if the second read address is not a last address in the group, the third read address is the first read address plus 1; and the fourth read address is the third read address plus 2 to the power of N-i-2.

In an embodiment, the respectively reading, by the controller, a first data pair and a second data pair from a first read address and a second read address in the memory at an $(i-1)^{th}$ stage includes:
in response to that all data pairs in addresses in a first group at the $(i-1)^{th}$ stage are written, reading, by the controller in a first clock cycle, the first data pair from the first read address and inputting the first data pair to the first rearrangement unit; and reading, by the controller in a second clock cycle subsequent to the first clock cycle, the second data pair from the second read address and inputting the second data pair to the first rearrangement unit.

In an embodiment, the sequentially performing, by the processing engine, a radix-2 butterfly operation on the third data pair and the fourth data pair includes:

starting, by the processing engine in a third clock cycle, to perform the radix-2 butterfly operation on the third data pair, and after t clock cycles, outputting the obtained first result pair to the second rearrangement unit; and starting, by the processing engine in a fourth clock cycle subsequent to the third clock cycle, to perform the radix-2 butterfly operation on the fourth data pair, and after the t clock cycles, outputting the obtained second result pair to the second rearrangement unit.

In an embodiment, the respectively writing, by the controller, the fifth data pair and the sixth data pair into a first write address and a second write address in the memory at the $i^{th}$ stage includes:

writing, by the controller, the fifth data pair into the first write address in a $(t+5)^{th}$ clock cycle; and writing, by the controller, the sixth data pair into the second write address in a $(t+6)^{th}$ clock cycle.

In an embodiment, the performing, by the first rearrangement unit, a first rearrangement operation on the first data pair and the second data pair includes:

receiving, by the first rearrangement unit, the first data pair in a first clock cycle;
receiving, by the first rearrangement unit, the second data pair in a second clock cycle, and temporarily storing the first data pair;
outputting, by the first rearrangement unit in a third clock cycle subsequent to the second clock cycle, a first piece of data in the first data pair and a first piece of data in the second data pair as the third data pair, and temporarily storing a second piece of data in the second data pair; and
outputting, by the first rearrangement unit in a fourth clock cycle subsequent to the third clock cycle, a second piece of data in the first data pair and the second piece of data in the second data pair as the fourth data pair.

In an embodiment, the performing, by the second rearrangement unit, a second rearrangement operation on the first result pair and the second result pair includes:

receiving, by the second rearrangement unit in a $(t+3)^{th}$ clock cycle, the first result pair;
receiving, by the second rearrangement unit in a $(t+4)^{th}$ clock cycle, the second result pair, and temporarily storing the first result pair;

outputting, by the second rearrangement unit in a $(t+5)^{th}$ clock cycle, a first result in the first result pair and a first result in the second result pair as a fifth data pair, and temporarily storing a second result in the second result pair; and

outputting, by the second rearrangement unit in a $(t+6)^{th}$ clock cycle, a second result in the first result pair and the second result in the second result pair as a sixth data pair.

In an embodiment, a $0^{th}$ circuit part corresponding to the first stage among the N circuit parts includes a $0^{th}$-order controller, a $0^{th}$-order processing engine, and a $0^{th}$-order memory, and a transformation operation of a $0^{th}$ stage includes:

sequentially performing, by the $0^{th}$ processing engine, a radix-2 butterfly operation separately on $n/2$ input pairs formed by every two pieces of neighboring data in the n-point input sequence sorted in a reverse bit order, to sequentially output $n/2$ result pairs; and

sequentially writing, by the $0^{th}$-order controller, the $n/2$ result pairs to consecutive $n/2$ addresses in the $0^{th}$-order memory.

In an embodiment, an $(N-1)^{th}$ circuit part corresponding to the last stage among the N circuit parts includes an $(N-1)^{th}$-order controller and an $(N-1)^{th}$-order processing engine, and a transformation operation of the $(N-1)^{th}$ stage includes:

sequentially reading, by the $(N-1)^{th}$-order controller, $n/2$ data pairs from $n/2$ addresses in a memory at a $(N-2)^{th}$ stage; and

sequentially performing, by the $(N-1)^{th}$-order processing engine, a radix-2 butterfly operation on the $n/2$ data pairs, to sequentially output $n/2$ result pairs.

In an embodiment, a $0^{th}$ circuit part corresponding to the first stage or an $(N-1)^{th}$ circuit part corresponding to the last stage among the N circuit parts has a same hardware structure as the $i^{th}$ circuit part and performs a same transformation operation as the $i^{th}$ circuit part.

In an embodiment, the target transformation is fast Fourier transform FFT, inverse fast Fourier transform IFFT, number-theoretic transform NTT, inverse number-theoretic transform INTT, NTTP transform obtained by combining preprocessing and NTT in negative wrapped convolution NWC, or INTTP transform obtained by combining INTT and postprocessing in NWC; and the transformation operations of the N stages are performed in a decimation-in-time DIT form or in a decimation-in-frequency DIF form.

According to a second aspect, acceleration hardware for performing a target transformation is provided. The target transformation includes transformation operations of N stages, the acceleration hardware includes N circuit parts corresponding to the N stages, wherein an $i^{th}$ circuit part corresponding to any $i^{th}$ stage other than a first stage and a last stage includes a controller, a processing engine, a memory, a first rearrangement unit, and a second rearrangement unit; and in the transformation operation of the $i^{th}$ stage:

the controller is configured to respectively read a first data pair and a second data pair from a first read address and a second read address in the memory at an $(i-1)^{th}$ stage;

the first rearrangement unit is configured to perform a first rearrangement operation on the first data pair and the second data pair, to sequentially output a third data pair and a fourth data pair;

the processing engine is configured to sequentially perform a radix-2 butterfly operation on the third data pair and the fourth data pair, to sequentially output a first result pair and a second result pair;

the second rearrangement unit is configured to perform a second rearrangement operation on the first result pair and the second result pair, to obtain a fifth data pair and a sixth data pair; and

the controller is further configured to respectively write the fifth data pair and the sixth data pair into a first write address and a second write address in the memory at the $i^{th}$ stage.

In an embodiment, the first rearrangement unit includes a first register, a second register, a first multiplexer, a second multiplexer, and a multiplex control portion, wherein

one input terminal of the first multiplexer and one input terminal of the second multiplexer both receive a first piece of data in a currently read data pair,

the first register receives and temporarily stores a second piece of data in the currently read data pair, and an output terminal of the first register is coupled to an other input terminal of the first multiplexer and an other input terminal of the second multiplexer,

an output terminal of the first multiplexer is coupled to an input terminal of the second register,

the second register outputs a first piece of data in a data pair currently obtained through rearrangement, and the second multiplexer outputs a second piece of data in the data pair currently obtained through rearrangement, and the multiplex control portion is configured to control the first multiplexer and the second multiplexer to alternately select one of two inputs thereof as an output.

In an embodiment, the multiplex control portion includes a third register, a fourth register, and an inverter, wherein

an output terminal of the third register is coupled to a control terminal of the first multiplexer, an input terminal of the fourth register, and an input terminal of the inverter,
an output terminal of the fourth register is coupled to a control terminal of the second multiplexer, and
an output terminal of the inverter is coupled to an input terminal of the third register.

In an embodiment, the first rearrangement unit and the second rearrangement unit have a same hardware structure.

In an embodiment, the processing engine includes a modular multiplication unit, and the modular multiplication unit includes a first integer multiplier, a second integer multiplier, and a third integer multiplier, wherein the first integer multiplier is implemented by using a digital signal processor DSP, and the second integer multiplier and the third integer multiplier are implemented by using a look-up table LUT.

According to a third aspect, a polynomial multiplier is provided, receiving an n-point first input sequence and an n-point second input sequence, and outputting an n-point polynomial multiplication output sequence, wherein the polynomial multiplier includes a first transformation module, a second transformation module, a pointwise multiplication hardware module, and a third transformation module, wherein the first transformation module, the second transformation module, and the third transformation module each include the acceleration hardware according to the second aspect;

the first transformation module is configured to perform NTTP on the first input sequence in a DIF form, to output a first output sequence;
the second transformation module is configured to perform NTTP on the second input sequence in a DIF form, to output a second output sequence;
the pointwise multiplication hardware module is configured to perform pointwise multiplication on the first output sequence and the second output sequence, to output a third output sequence; and
the third transformation module is configured to perform INTTP on the third output sequence in a DIT form, to output the n-point polynomial multiplication output sequence.

In the embodiments of this disclosure, a method for performing a target transformation by using acceleration hardware and corresponding acceleration hardware is provided. A controller, a processing engine, a memory, a first rearrangement unit, and a second rearrangement unit are disposed in an $i^{th}$ circuit part corresponding to any $i^{th}$ stage other than a first stage and a last stage in the foregoing acceleration hardware. A pair of data is stored at one address in the memory, and switching is performed between a storage pair in the memory and a calculation pair of a butterfly operation in the processing engine by using the first rearrangement unit and the second rearrangement unit, thereby eliminating a mismatch between the storage pair and the calculation pair. This achieves an efficient data flow, and can unify speeds of a calculation unit and a memory, thereby improving utilization of the calculation unit and improving overall transformation performance.

**BRIEF DESCRIPTION OF THE DRAWINGS**

To describe the technical solutions in embodiments of the present invention more clearly, the following briefly describes the accompanying drawings required for describing the embodiments. Apparently, the accompanying drawings in the following descriptions show merely some embodiments of the present invention, and a person of ordinary skill in the art may still derive other drawings from these accompanying drawings without creative efforts.

FIG. 1 is a schematic structural diagram of dedicated acceleration hardware that performs target transformation in a DIT form according to an embodiment;
FIG. 2 is a flowchart of a pair of butterfly operation processing in any intermediate stage, an $i^{th}$ stage, in a method for performing a target transformation by using acceleration hardware according to an embodiment;
FIG. 3 is a data flow diagram (a butterfly diagram) of 16-point DIT NTT according to an embodiment, wherein an address access sequence at each stage, a butterfly unit calculation sequence, and an access address of each piece of data are marked;
FIG. 4 is a schematic structural diagram of a first rearrangement unit in acceleration hardware according to an embodiment;
FIG. 5 is a schematic structural diagram of a processing engine in acceleration hardware according to an embodiment; and
FIG. 6 is a schematic structural diagram of a polynomial multiplier according to an embodiment.

## DETAILED DESCRIPTION

The implementations provided in this disclosure are described below with reference to the accompanying drawings.

NTT transforms a coefficient $a_i$ of a polynomial $a(x) = \sum_{i=0}^{n-1} a_i x^i$ into $A_j$, and INTT is an inverse operation thereof. In a mainstream post-quantum password solution, NTT and INTT are usually defined in a polynomial ring $R_q = \mathbb{Z}_q[x]/x^n+1$. Moreover, a negative wrapped convolution (NWC, negative wrapped convolution) method is used to reduce an additional calculation amount caused by filling zero in polynomial multiplication.

The following describes an operation of NWC by using pseudocode, providing an effective method for calculating a polynomial product c(x).

---

**Input:** $a, b \in \mathbb{Z}_q[x]/\langle x^n + 1 \rangle$
**Output:** $c \in \mathbb{Z}_q[x]/\langle x^n + 1 \rangle$
  1: $\bar{a} = a(x) \odot (w_{2n}^0, w_{2n}^1, \cdots, w_{2n}^{n-1})$      $\triangleright$ preprocessing
  2: $\bar{b} = b(x) \odot (w_{2n}^0, w_{2n}^1, \cdots, w_{2n}^{n-1})$      $\triangleright$ preprocessing
  3: $\bar{c} = \mathrm{INTT}(\mathrm{NTT}(\bar{a}) \odot \mathrm{NTT}(\bar{b}))$
  4: $c = \bar{c} \odot (w_{2n}^{-0}, w_{2n}^{-1}, \cdots, w_{2n}^{-(n-1)})$      $\triangleright$ postprocessing

---

where a(x) and b(x) are polynomials in $R_q = \mathbb{Z}_q[x]/x^n+1$, whose coefficients are respectively $a_{n-1}$ to $a_0$ and $b_{n-1}$ to $b_0$, wherein $a_i$, $b_i \in [0, q)$. A polynomial c(x) with n coefficients is obtained through polynomial multiplication of a(x) and b(x).

As shown in the foregoing pseudocode, when polynomial multiplication is performed, NTT and INTT operations need to be performed in the third step, preprocessing shown in the first step and the second step needs to be performed before the NTT operation is performed, and postprocessing shown in the fourth step further needs to be performed after the INTT operation is performed.

To accelerate operations, a preprocessing step may be integrated into NTT, and a postprocessing step may be integrated into INTT.

For brevity, in the embodiments of this disclosure, NTTP is introduced to represent a transformation obtained by combining the preprocessing and NTT in NWC, and INTTP is introduced to represent a transformation obtained by combining INTT and the postprocessing in NWC, which are respectively shown as the following formulas (1) and (2):

$$A_j = NTT^{\Psi}(a) = \sum_{i=0}^{n-1} a_i \Psi_{2n}^i \omega_n^{ij} \bmod q \qquad (1)$$

$$a_i = INTT^{\Psi^{-1}}(A) = \frac{1}{n} \sum_{j=0}^{n-1} A_j \Psi_{2n}^{-j} \omega_n^{-ij} \bmod q \qquad (2)$$

wherein $\omega_n$ is a primitive nth root of unity on $\mathbb{Z}_q$, satisfying $\omega_n^n \equiv 1 \bmod q, \omega_n^{n/2} \equiv -1 \bmod q$, and $\Psi_{2n}$ is a primitive 2nth root of unity, satisfying $\Psi_{2n}^2 \equiv \omega_n \bmod q$.

It can be seen that algorithm principles of NTTP and NTT are the same, but one preprocessing factor is added to multiplication factors. NTT is a FFT variant of a finite field, and has an addition modulo operation compared with FFT. However, an algorithm principle of NTT is also consistent with the algorithm principle of FFT in a discrete form. Similarly, algorithm principles of inverse transformations such as INTTP, INTT, and IFFT are also consistent with the algorithm principle of NTTP, and a difference mainly lies in a multiplication factor and a constant 1/n that finally needs to be multiplied. All such types of transformation may be implemented by using a same data flow diagram (a butterfly diagram). Therefore, such types of transformation may be accelerated by using a same hardware architecture.

Therefore, the discussion about the embodiments of the present disclosure is applicable to all the foregoing transformations and other transformations having consistent or similar algorithm principles. Therefore, in the discussion of the present disclosure, when a general solution, a general operation in a solution, or the like is involved, a target transformation may be used as a general name. The target transformation is a discrete transformation that transforms an input coefficient sequence into an output coefficient sequence or an inverse transformation thereof, and may be converted into butterfly operations of N stages.

Currently, some algorithms have been proposed, for example, a decimation-in-time (Decimation-In-Time, DIT) method or a decimation-in-frequency (Decimation-In-Frequency, DIF) method, to convert a n-point target transformation into an N-order radix-2 butterfly operation, where $n=2^N$. A dedicated accelerator for performing a target transformation may be implemented by using a space parallel architecture, a pipeline architecture, or the like. However, existing accelerator solutions have shortcomings in design for data storage and reading, resulting in insufficient efficiency in data storage and reading, and thus performance of the target transformation needs further improvement.

In addition, in some cases, to adapt to changes of various security parameters in a process of standardizing a PQC solution, scalability of an accelerator for performing a target transformation is significant. Currently, some scalable accelerator architectures are provided. However, some of the accelerators have poor universality. Calculation rules of data read and write addresses are different from each other when calculation is performed stage by stage. Data selection logic that a number of groups is the same as a total number of orders needs to be set, and any number of orders cannot be conveniently set. Alternatively, control units of some accelerators are complex, and occupies a large amount of area in addition to calculation, and calculation units in some architectures have low utilization. Therefore, it is challenging to have both good hardware efficiency and scalability.

In view of this, in the embodiments of this disclosure, a solution of accelerating a target transformation by using hardware is provided. In this solution, execution of the target transformation is accelerated through in-pair storage and rearrangement of data, thereby improving performance of the target transformation.

Specifically, because the butterfly operation processes a pair of data each time, input data and output data of the butterfly operation are in pairs (which may also be referred to as a calculation pair below), and the memory can perform only one read/write operation in one clock cycle, the solution of the embodiments of this disclosure proposes storing a pair of data (which may also be referred to as a storage pair below) at one storage address in the memory. Therefore, two pieces of data can be processed at the same time during each read/write operation, so that data flow speeds for storage access and calculation are kept consistent, thereby improving execution efficiency of a transformation operation. This is especially beneficial to acceleration hardware of a pipeline architecture, because memory access and a butterfly operation in a processing engine can be simultaneously performed in pairs on a pipeline, which easily enables the pipeline to be completely filled, and enables all stages of the pipeline to simultaneously run.

In addition, it is found in the embodiments of this disclosure that, although in an $N^{th}$-order butterfly operation, there is no direct correspondence between a storage pair at a previous stage and a calculation pair at a current stage in each stage other than the first stage and the last stage (that is, at an intermediate stage), two input calculation pairs of two butterfly operations may be obtained after two storage pairs in two addresses having a preset relationship at the stage are rearranged, and then two output calculation pairs of the two butterfly operations may be rearranged and then stored, to facilitate reading at a next stage. It may be understood that in this disclosure, "rearrangement" refers to rearranging two data pairs, so that one piece of data is extracted from each of the two data pairs to form a new data pair, and the other piece of data left in each of the two data pairs to form another new data pair.

Therefore, the solution in the embodiment of this disclosure introduces two rearrangement units at each intermediate stage. The first rearrangement unit is located before the processing engine used for the butterfly operation, and is configured to rearrange two storage pairs read from a previous stage into two calculation pairs, to be respectively used as input data pairs of the two butterfly operations. The second rearrangement unit is located after the processing engine, and is configured to rearrange two calculation pairs used as output data pairs obtained from the two butterfly operations into two storage pairs, to be respectively stored at two addresses in the memory at a current stage, for being read by a next stage to continue a subsequent transformation operation. Therefore, a data pair read from the memory or to be written into the memory is rearranged by using the first rearrangement unit and the second rearrangement unit, so that a mismatch between a data pair in the memory and a data pair used for calculation can be eliminated.

Based on the foregoing operations of in-pair storage access and rearrangement, the solution in the embodiments of this disclosure achieves an efficient data flow, and can unify speeds of the calculation unit and the memory, thereby improving utilization of the calculation unit.

In addition, as will be described in detail below, in some embodiments, data flow control is simple, thereby effectively reducing a hardware resource occupied by control logic.

In addition, in some embodiments, a grouped in-pair storage access manner is provided to control the data flow, ensures that the control logic at all stages is consistent, and therefore, has good scalability and can support various polynomial lengths and data bit widths.

The following mainly describes the solutions in the embodiments of this disclosure in detail by using the NTTP in a DIT form as an example. As described above, NTT, INTT, FFT, IFFT, INTTP, and the like may all use the same hardware architecture, and a difference mainly lies in a factor in multiplication and multiplication by a constant 1/n. Based on the descriptions of the inventive concepts, technical details, and the like of the embodiments in this disclosure, a person skilled in the art can easily understand that various types of target transformations are correspondingly set or changed, and therefore details are not listed below.

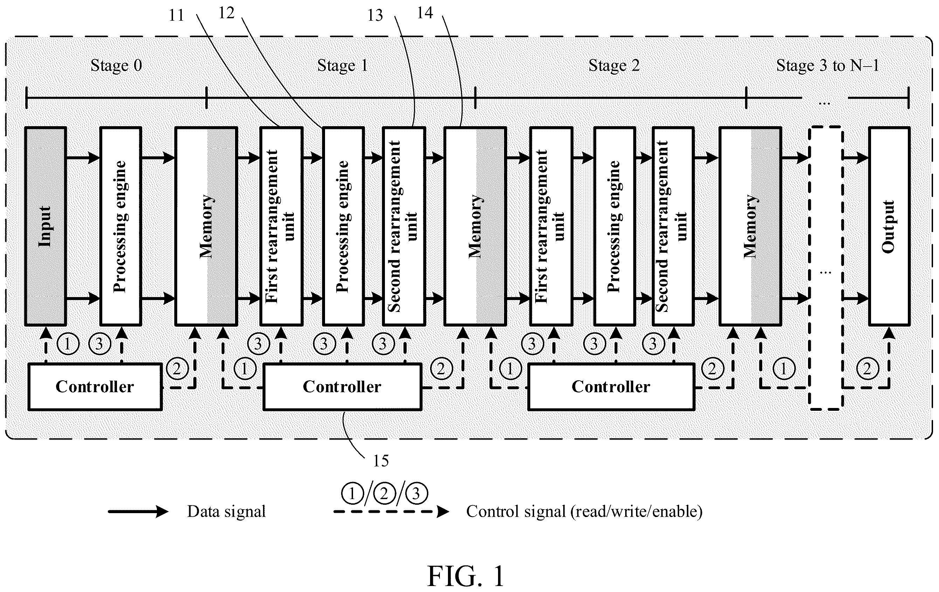

FIG. 1 is a schematic structural diagram of dedicated acceleration hardware that performs target transformation in a DIT form according to an embodiment, wherein the target transformation includes transformation operations of N stages.

FIG. 1 shows acceleration of a target transformation in a DIT form. In this embodiment of this disclosure, dedicated acceleration hardware is designed to include N circuit parts corresponding to the N stages, and an $i^{th}$ circuit part corresponding to any $i^{th}$ stage other than the first stage and the last stage includes: a controller, a processing engine, a memory, and a first rearrangement unit and a second rearrangement unit.

The $i^{th}$ stage may also be referred to as an intermediate stage below, where $0<i<N-1$. In other words, intermediate stages, that is, stages 1 to N-2, in FIG. 1 all have the same hardware structure. For brevity, presentation of the hardware structure after the stage 2 is omitted in FIG. 1. A hardware structure of the last stage, that is, the stage N-1, is also substantially omitted in FIG. 1. This is because in the acceleration hardware for the DIT form, a circuit part of the stage N-1 has the same hardware structure as that of the circuit part of the intermediate stage, and performs the same transformation operation. In FIG. 1, a memory at the stage N-1 is marked by "output", to emphasize that a final output result of the target transformation is stored in the memory. In some cases, the output memory at the stage N-1 may also be omitted. In other words, the final output result does not need to be stored, but is directly output to the outside, or directly output to another subsequent processing circuit.

As shown in FIG. 1, a circuit part corresponding to the first stage, that is, a stage 0, in acceleration hardware for the DIT form includes only a controller, a processing engine, and a memory, without a need of a rearrangement unit. An input memory (marked by "input" in FIG. 1) may further be provided, and is configured to store an input sequence arranged in a bit-reversed (Bit-Reversed) order. For example, an n-point input sequence, where $n=2^N$, may be first arranged in a bit-reversed order, n/2 input data pairs formed by every two adjacent pieces of data obtained through storage in the bit-reversed order are sequentially stored in consecutive n/2 addresses in the input memory.

A solid-line arrow in FIG. 1 represents a data flow, a dashed-line arrow represents a control signal, ① represents a read control signal, ② represents a write control signal, and ③ represents an enable control signal. As shown in FIG. 1, at the stage 0, the controller may control a read operation of the input memory and a write operation of the memory at the stage 0, and generate an enable signal of the processing engine.

Through control of the controller at the stage 0, the transformation operation of the stage 0 may be performed as follows:

the controller at the stage 0 sequentially reads n/2 input data pairs from n/2 addresses in the input memory;
the processing engine at the stage 0 sequentially performs a radix-2 butterfly operation on the read n/2 input pairs, to sequentially output n/2 result pairs; and
the controller at the stage 0 sequentially writes the n/2 result pairs to consecutive n/2 addresses in the memory at the stage 0.

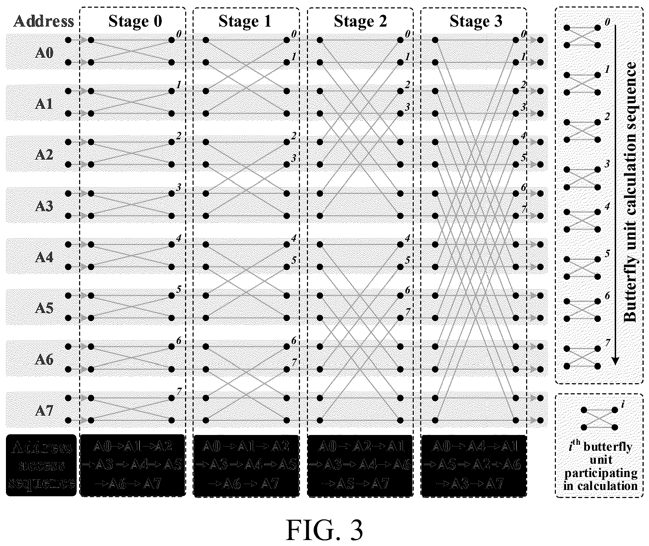

A data flow diagram of 16-point DIT NTT shown in FIG. 3 is used as an example. The 16-point DIT NTT includes the transformation operation of four stages (stages 0 to 3). At the stage 0, every two neighboring pieces of input data in a 16-point input sequence arranged in a bit-reversed order have been sequentially stored in addresses A0 to A7 in the input memory. Then, as shown in an address access sequence at a lower part of FIG. 3, eight input pairs are respectively read in a sequence of the addresses A0 to A7 at the stage 0, and as shown by sequential digits marked at an upper right corner of butterfly units in FIG. 3, a butterfly operation is sequentially performed on the eight input pairs read from the addresses A0 to A7 at the stage 0.

In addition, in FIG. 3, each address corresponds to two adjacent rows of data (represented by a gray bar), which represents that read/write addresses of the two rows of data at each stage are corresponding addresses marked at the leftmost. As shown in FIG. 3, at the stage 0, n/2 result pairs obtained through the butterfly operations are respectively sequentially written into the addresses A0 to A7 in the memory at the stage 0.

In some cases, the input memory at the stage 0 is not necessary, that is, input data does not need to be stored, but input data is directly received from another external or previous processing circuit. In this case, the processing engine at the stage 0 may sequentially perform a radix-2 butterfly operation separately on n/2 input pairs that are directly received, to sequentially output n/2 result pairs, and the controller at the stage 0 sequentially writes the n/2 result pairs into consecutive n/2 addresses in the memory at the stage 0. The n/2 input pairs are the same as the n/2 input pairs sequentially stored in the foregoing input memory.

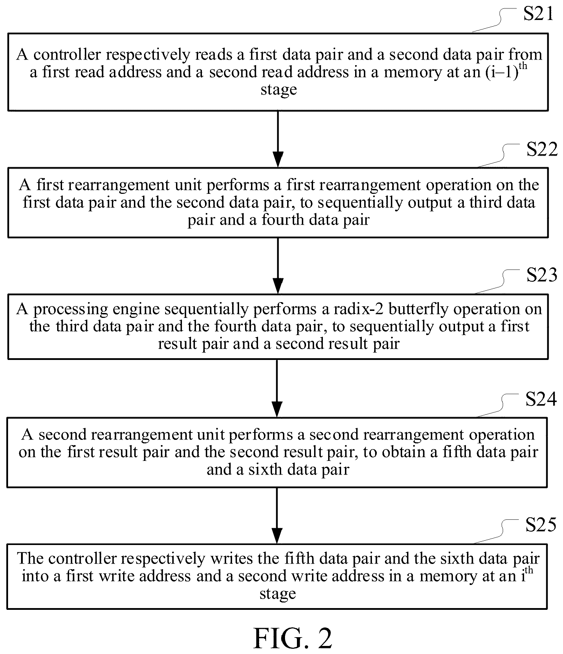

Referring to FIG. 1 again, at any subsequent intermediate stage, at an $i^{th}$ order, as described above, to match the storage pair with the calculation pair and keep data flow speeds of storage access and calculation consistent, the solution of this embodiment of this disclosure processes the butterfly operation in pairs. In other words, an $i^{th}$-order transformation operation may be divided into n/4 pairs of butterfly operations, and a procedure of any pair of butterfly operations may include the following steps as shown in FIG. 2.

Step S21: A controller respectively reads a first data pair and a second data pair from a first read address and a second read address in the memory at an $(i-1)^{th}$ stage.

Step S22: A first rearrangement unit performs a first rearrangement operation on the first data pair and the second data pair, to sequentially output a third data pair and a fourth data pair.

Step S23: A processing engine sequentially performs a radix-2 butterfly operation on the third data pair and the fourth data pair, to sequentially output a first result pair and a second result pair.

Step S24: A second rearrangement unit performs a second rearrangement operation on the first result pair and the second result pair, to obtain a fifth data pair and a sixth data pair.

Step S25: The controller respectively writes the fifth data pair and the sixth data pair into a first write address and a second write address in the memory at the $i^{th}$ stage.

The controller, the processing engine, and the first and second rearrangement units all belong to a circuit part of the $i^{th}$ stage.

The foregoing five steps may be considered as five sub-stages: data reading, the first rearrangement operation, a processing engine operation, the second rearrangement operation, and data writing, such as five sub-stages of a data flow shown by solid line arrows at the stage 1 or 2 in FIG. 1.

An example of the circuit part at the intermediate stage, that is, the $i^{th}$ stage, is described in detail by using the stage 1 as an example. As shown in FIG. 1, the circuit part includes: a first rearrangement unit 11, a processing engine 12, a second rearrangement unit 13, a memory 14, and a controller 15.

The memory 14 may be a random access memory (RAM, Random Access Memory), and is configured to store calculation results in pairs at a current stage, that is, one address stores one data pair. For example, two pieces of data in one storage pair may be spliced into one piece of data and stored in an address in the memory 14. The memory 14 may store, in pairs by using consecutive n/2 addresses, n results that are obtained through the transformation operation of the $1^{st}$ stage performed on the n-point input sequence.

In FIG. 1, a gray half of the memory 14 represents a sub-stage of data reading at a next stage, and a white half of the memory 14 represents a sub-stage of data writing at a current stage. For example, the memory 14 may be a dual-port RAM, and can perform a read operation and a write operation in one clock cycle at the same time, provided that read and write addresses are not the same. Therefore, it is ensured that the two sub-stages of data reading and writing can run at the same time during pipelining.

As shown in FIG. 1, the controller 15 controls a read operation of a memory at a previous stage and a write operation of a memory at the current stage, and generates an enable signal of the first rearrangement unit 11, the processing engine 12, and the second rearrangement unit 13.

The data flow in the foregoing five sub-stages may be implemented at the stage 1 through control of the controller 15.

In some examples, any $q^{th}$ pair of butterfly operations at an $i^{th}$ order at any intermediate stage may be implemented by using same control logic. For $N^{th}$-order transformation in a DIT form, control logic at the last order may also be the same as that of the intermediate stage.

For example, for any $i^{th}$ order, values of two read addresses read from a memory at a previous order and values of two write addresses written into a memory at a current order in each pair of butterfly operation processing are the same, and n/4 pairs of butterfly operation processing at an entire stage may be implemented in the following grouped in-pair storage access (read/write) manner:

All input/output data at this stage may be divided into a plurality of groups in a manner of dividing input/output data of mutually staggered butterfly units in an $N^{th}$-order data flow diagram (a butterfly diagram) of the target transformation into one group, input/output data in each group is divided into upper and lower halves, and the plurality of groups are sequentially read/written from top to bottom. An adjacent pair of input/output data in the upper half and the lower half is sequentially alternately read/written in any group from top to bottom. All groups at a stage are accessed in a same manner, and after a group is accessed, a next group is accessed.

The 16-point DIT NTT data flow diagram in FIG. 3 is used as an example. For example, for stage 2, first four butterfly units are interlaced together, and are divided into a first group, and last four butterfly units are interlaced together, and are divided into a second group. Data in any group is further divided into upper and lower halves. For example, in the first group, data of the addresses A0 and A1 is an upper half, and data of the addresses A2 and A3 is a lower half. An address access sequence at the stage 2 is: the first group is first accessed, and the second group is accessed after the first group is completed. Data in the upper half and data in the lower half are alternately accessed sequentially from top to bottom in both the first group and the second group. In this way, a specific address access sequence shown at the bottom of FIG. 3 can be deduced.

A running sequence of the butterfly operation processing at the stage 2 is as marked by a number at the upper right corner in the figure, from 0 to 7, and each two consecutively run butterfly operation processing is the foregoing pair of butterfly operation processing. For example, a $0^{th}$ butterfly unit and a $1^{st}$ butterfly unit are processed in pairs, and two calculation pairs of the $0^{th}$ butterfly unit and the $1^{st}$ butterfly unit respectively correspond to rearrangement of two storage pairs in the addresses A0 and A2. The calculation pair of the $0^{th}$ butterfly unit corresponds to data of respective upper halves in the two storage pairs in the addresses A0 and A2, and the calculation pair of the $1^{st}$ butterfly unit corresponds to data of respective lower halves in the two storage pairs in the addresses A0 and A2.

As shown in FIG. 3, a data flow implemented in the embodiments of this disclosure processes data in pairs in two pairing manners. One pairing manner is a storage pair, formed by data at every two adjacent rows sequentially from top to bottom at each stage in FIG. 3. One storage pair is stored in an address in a memory. The other pairing manner is a calculation pair, formed by two pieces of input data or output data of a processing engine or a butterfly unit. The first rearrangement unit and the second rearrangement unit can switch between the two pairing manners by rearranging data, so that the memory and the processing engine can both run according to the respective pairing manners.

According to the foregoing descriptions, it may be deduced that at the $i^{th}$ order (0<i, that is, not the first order) in any N orders, in any pair of butterfly operation processing, the second read/write address is the first read/write address plus 2 to the power of i-1. For example, the second read address and the second write address in the procedure shown in FIG. 2 are respectively the first read address and the first write address plus 2 to the power of i-1.

In addition, it may be deduced that, at an $i^{th}$ order (0<i, that is, not the first order) in any N orders, n/2 addresses may be sequentially divided equally into $2^{N-i-1}$ groups. A following relationship exists between access addresses of two pairs of subsequently performed butterfly operation processing:

if the second read/write address of a current pair is the last address in a group in which the second read/write address of the current pair is located, the first read/write address of a next pair is the second read/write address of the current pair plus 1; or otherwise, the first read/write address of a next pair is the first read/write address of the current pair plus 1. As described above, the second read/write address of the next pair is the first read/write address of the next pair plus 2 to the power of i-1.

Therefore, the following formula may be deduced to obtain an entire address access sequence at the $i^{th}$ stage:

$$Addr_{ij} = ((j >> i) << i) + ((j \% 2) << (i - 1)) + ((j \% 2^i) >> 1)$$

where $Addr_{ij}$ is a $j^{th}$ accessed (read/write) address at the $i^{th}$ stage, $i \in \{1, 2, ..., N-1\}$, and $j \in \{0, 1, ..., n/2 - 1\}$. For the first read/write address in any $q^{th}$ pair of butterfly operation processing, j=2q, and for the second read/write address in any $q^{th}$ pair of butterfly operation processing, j=2q+1.

For an operator in the foregoing formula, "j>>i" represents that j is moved to the right by i bits, "j<<i" represents that j is moved to the left by i bits, empty bits are all filled with 0, and "j%2" represents j modulo 2, that is, a remainder of j divided by 2.

Therefore, in the solution in foregoing embodiments, control logic of a data flow is simple, and control logic at stages of orders is consistent. Therefore, scalability is relatively good.

In some examples, the acceleration hardware shown in FIG. 1 may be run in a pipeline manner. Therefore, after the pipeline is full, all sub-stages at all stages may run at the same time, that is, all hardware units in FIG. 1 may run at the same time. Some hardware units in FIG. 1, such as the first rearrangement unit, the second rearrangement unit, and the processing engine, may also be implemented by using a pipeline architecture.

A pipeline operation is specifically described still by using stage 1 in FIG. 1 as an example.

Step S21 (a sub-stage 1) in FIG. 2 may be performed by the controller 15 in two consecutive clock cycles. For example, in the $1^{st}$ clock cycle, the controller 15 reads a first data pair from a first read address in a memory at a previous order (the stage 0), and inputs the first data pair to the first rearrangement unit 11. In this case, the first rearrangement unit 11 receives the first data pair. In the $2^{nd}$ clock cycle, the controller 15 reads a second data pair from a second read address in the memory at the stage 0 and inputs the second data pair to the first rearrangement unit 11. In this case, the first rearrangement unit 11 receives the second data pair.

After the first rearrangement unit 11 receives the first data pair in the $1^{st}$ clock cycle, the first rearrangement unit 11 may perform step S22 (a sub-stage 2) in FIG. 2 in subsequent three consecutive clock cycles. For example, in the $2^{nd}$ clock cycle, the first rearrangement unit 11 temporarily stores the first data pair; in the $3^{rd}$ clock cycle, the first rearrangement unit 11 temporarily stores the second piece of data in the second data pair and outputs the first piece of data in the first data pair

10

and the first piece of data in the second data pair as a third data pair, and in this case, the processing engine receives the third data pair; and in the 4th clock cycle, the first rearrangement unit outputs the second piece of data in the first data pair and the second piece of data in the second data pair as a fourth data pair, and in this case, the processing engine receives the fourth data pair.

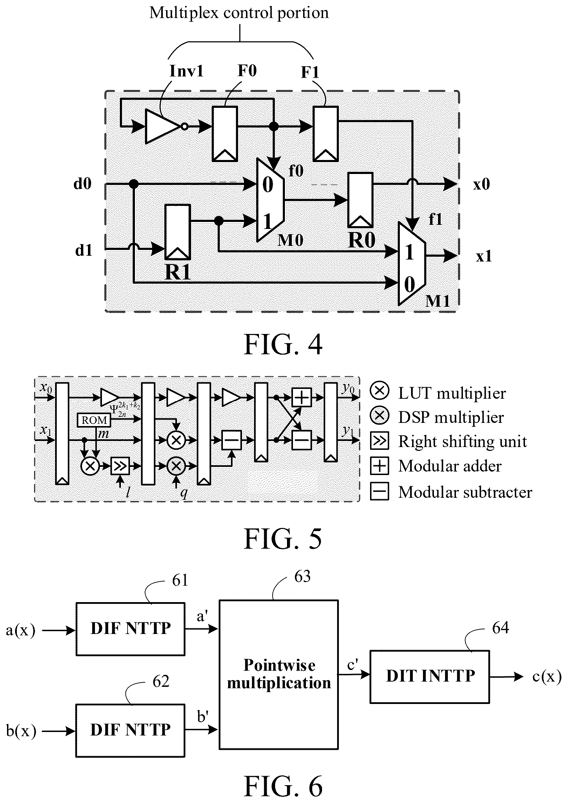

In some examples, the first rearrangement unit 11 may have a hardware structure shown in FIG. 4.

As shown in FIG. 4, the first rearrangement unit 11 includes a first register R1, a second register R0, a first multiplexer M0, a second multiplexer M1, and a multiplex control portion. The multiplex control portion outputs control signals f0 and f1, which are used for respectively controlling the first multiplexer M0 and the second multiplexer M1 to alternately select one of two inputs of the first multiplexer M0 and the second multiplexer M1 as an output.

One input terminal of the first multiplexer M0 and one input terminal of the second multiplexer M1 both receive a first piece of data d0 in a currently read data pair. In FIG. 4, the two input terminals are input terminals corresponding to "0", that is, a terminal that is selected to be output when the control signal of the multiplexer is 0. However, this is merely exemplary and not limited, and a person skilled in the art may make any variation according to a requirement, and correspondingly change the control signal of the multiplexer.

The first register R1 receives and temporarily stores the second piece of data d1 in the currently read data pair in a next clock cycle correspondingly, and an output terminal of the first register R1 is coupled to the other input terminal of the first multiplexer M0 and the other input terminal of the second multiplexer d1, which is an input terminal corresponding to "1" in FIG. 4.

An output terminal of the first multiplexer M0 is coupled to an input terminal of the second register R0.

The second register R0 outputs the first piece of data x0 in a data pair currently obtained through rearrangement, and the second multiplexer M1 outputs a second piece of data x1 in the data pair currently obtained through rearrangement.

Therefore, the first register R1 is configured to temporarily store the input data d1 directly, and the second register R0 is configured to temporarily store another piece of input data d0 or data stored in R1 in a previous clock cycle.

The multiplex control portion in FIG. 4 includes a third register F0, a fourth register F1, and an inverter Inv1. However, this is merely exemplary and is not limited, and a person skilled in the art may make any variation according to a requirement.

An output terminal of the third register F0 is coupled to a control terminal of the first multiplexer M0, an input terminal of the fourth register F1, and an input terminal of the inverter Inv1. The third register F0 outputs a control signal f0.

An output terminal of the fourth register F1 is coupled to a control terminal of the second multiplexer M1. The fourth register F1 outputs a control signal f1.

An output terminal of the inverter Inv1 is coupled to an input terminal of the third register F0.

After the multiplex control portion runs stably, two control signals f0 and f1 that are in opposite phases may be output in one clock cycle, and f0 and f1 are inverted once in each subsequent clock cycle.

By using the first rearrangement unit 11 shown in FIG. 4, step S22 (the sub-stage 2) in FIG. 2 may be performed in subsequent three consecutive clock cycles as follows:

in the 2nd clock cycle, d0 and d1 in the first data pair are respectively temporarily stored in the second register R0 and the first register R1;

in the 3rd clock cycle, d1 in the second data pair is temporarily stored in the first register R1, the second register R0 outputs d0 in the first data pair as x0, the second multiplexer M1 outputs d0 in the second data pair as x1, in this case, the output x0 and x1 form the third data pair, and the second register R0 temporarily stores d1 in the first data pair that is stored in the 2nd clock cycle by the first register R1; and

in the 4th clock cycle, the second register R0 outputs d1 in the first data pair as x0, the second multiplexer M1 outputs d1 in the second data pair that is stored in the 3rd clock cycle by the first register R1 as x1, and in this case, the output x0 and x1 form the fourth data pair.

Then, after the processing engine 12 receives the third data pair in the 3rd clock cycle, the processing engine 12 may start to perform the first step in step S23 (a sub-stage 3) in FIG. 2, that is, start to perform the radix-2 butterfly operation on the third data pair, and output the obtained first result pair to the second rearrangement unit 13 after t clock cycles (that is, in a (t+3)th clock cycle). Moreover, after receiving the fourth data pair in the 4th clock cycle, the processing engine 12 may start to perform the second step, that is, start to perform the radix-2 butterfly operation on the fourth data pair, and output the obtained second result pair to the second rearrangement unit 13 after t clock cycles (that is, in a (t+4)th clock cycle). The t clock cycles are time required for one butterfly operation.

For the NTT, each butterfly operation includes a modular addition operation, a modular subtraction operation, and a modular multiplication operation, and a plurality of clock cycles is usually needed to complete calculation, that is, t>1. However, the processing engine 12 may alternatively use a pipeline circuit architecture. Therefore, the two butterfly operations may be respectively started in subsequent two clock cycles as described above.

In an example, the processing engine 12 may have a pipeline structure shown in FIG. 5.

As shown in FIG. 5, the processing engine 12 processes the butterfly operation by using a five-stage pipeline, wherein the first four stages of the pipeline perform modular multiplication by using a Shoup algorithm, and the fifth stage of the pipeline performs modular addition and modulus subtraction. The first four stages of the pipeline circuits in FIG. 5 may be regarded as a modular multiplication unit. The modular multiplication unit includes three integer multipliers, wherein a first integer multiplier is implemented by using a digital signal processor (DSP), and a second integer multiplier and a third integer multiplier are implemented by using a look-up table (LUT), thereby optimizing a key path and obtaining a better comprehensive result.

In addition, as shown in FIG. 5, a rotation factor (a rotation factor shown in the figure is used for NTTP) and a parameter m are prestored in a read-only memory (ROM) of the processing engine 12.

Therefore, the processing engine 12 having the structure in FIG. 5 needs to spend five clock cycles to complete one butterfly operation, that is, t=5.

After the second rearrangement unit 13 receives the first result pair in a $(t+3)^{th}$ clock cycle, the second rearrangement unit 13 may perform step S24 (a sub-stage 4) in FIG. 2 in subsequent three consecutive clock cycles. For example, in the $(t+4)^{th}$ clock cycle, the second rearrangement unit 13 temporarily stores the first result pair; in a $(t+5)^{th}$ clock cycle, the second rearrangement unit 13 temporarily stores the second result in the second result pair and outputs the first result in the first result pair and the first result in the second result pair as a fifth data pair, and in this case, the memory 14 receives the fifth data pair; and in a $(t+6)^{th}$ clock cycle, the second rearrangement unit 13 outputs the second result in the first result pair and the second result in the second result pair as the sixth data pair, and in this case, the memory 14 receives the sixth data pair.

The foregoing operations of the second rearrangement unit 13 are the same as the foregoing operations of the first rearrangement unit 11, and only processed data pairs are different. Therefore, the second rearrangement unit 13 may have a same hardware structure as the first rearrangement unit 11, for example, the hardware structure shown in FIG. 4, and details are not described herein again.

After the memory 14 receives the fifth data pair in the $(t+5)^{th}$ clock cycle, the controller 15 may control the memory 14 to perform step S25 (the sub-stage 5) in FIG. 2 in subsequent two consecutive clock cycles. For example, in the $(t+5)^{th}$ clock cycle, the controller 15 writes the fifth data pair into the first write address in the memory 14; and in the $(t+6)^{th}$ clock cycle, the controller 15 writes the sixth data pair into the second write address in the memory 14.

All the butterfly operation processing at one stage may be sequentially processed in the foregoing pipeline manner, and some operations of two subsequent pairs of the butterfly operation processing are simultaneously performed. For example, in the foregoing $3^{rd}$ and $4^{th}$ clock cycles, the controller 15 may subsequently read two corresponding data pairs from the third read address and the fourth read address corresponding to a next pair of butterfly operation processing, and sequentially run according to the foregoing pipeline procedure. Details are not described herein again.

In addition, in the pipeline, all N stages may run at the same time, but because a calculation result at a previous stage need to be read at a later stage, there is an initial delay at the $i^{th}$ stage. When the foregoing grouped in-pair storage access (read/write) manner is used, only after at the $(i-1)^{th}$ stage, calculation of a first group of butterfly units is completed and a result of the calculation is written into the memory, the $1^{st}$ read operation can be started at the $i^{th}$ stage. Therefore, in response to that writing of data pairs in all addresses of the first group at the $(i-1)^{th}$ stage is completed, in the subsequent first clock cycle, the controller at the $i^{th}$ stage starts the first read operation of this stage, and reads the first data pair from the first read address in the memory at the $(i-1)^{th}$ stage. According to the foregoing descriptions of the control logic and the data flow, in the subsequent first clock cycle, at the $(i-1)^{th}$ stage, the write operation in the second read address in the address access sequence at the $i^{th}$ stage is just completed. Therefore, the controller at the $i^{th}$ stage can start the second read operation of this stage in the subsequent second clock cycle, and read the second data pair from the second read address in the memory at the $(i-1)^{th}$ stage. Only the first read operation is performed after waiting, and subsequent read operations are performed without waiting. In this way, pipeline efficiency can be maximized.

The following uses an algorithm 1 written by using pseudocode to exemplify an $N^{th}$-order transformation operation of a complete pipeline DIT NTTP. The algorithm uses the foregoing grouped in-pair memory access solution. To describe an action of a register in pseudocode of the algorithm 1, that is, it represents that a value (a value obtained previously at a previous sub-stage) in the register is used first in a later sub-stage, and then the register is updated, the first sub-stage is placed in a code segment at the bottom, and code segments at the sub-stages are started in sequence from bottom to top according to a determining condition of the code segments.

The pipeline operations represented by the pseudocode are described in detail above, and details are not described herein again.

In addition, it may be understood that, because the algorithm 1 describes NTTP, a rotation factor of a butterfly unit that is executed for a $j^{th}$ time at the $i^{th}$ stage is:

$$\Psi_{2n}^{2k_1+k_2} = \omega_n^{k_1} \times \Psi_{2n}^{k_2},$$

where

$$k_1 = \left\lfloor j \times 2^{i+1}/n \right\rfloor \times 2^{N-1-i}, \text{ and } k_2 = 2^{N-1-i}.$$

If the algorithm 1 is used for another transformation, a value of the rotation factor may be adaptively changed. For an inverse transformation, multiplication by 1/n further needs to be added.

---

**Algorithm 1:** Pipeline DIT NTTP

---

**Input:** Array $a[n] \in \mathbb{Z}_q$, $\Psi_{2n}$, wherein $n=2^N$.

**Output:** Array $A[n] \in \mathbb{Z}_q$.

1:   **Function** Addr $(j, i)$ //calculate a read/write address of a memory

2:     $address \leftarrow ((j \gg i) \ll i) + ((j \% 2) \ll (i - 1)) + ((j \% 2^i) \gg 1)$

3:     **Return** $address$

4:   $j=0$

5:   **When** $j < n/2$ //stage 0

6:     $A_0[2j] \leftarrow a[\text{BitReverse}(2j)] + a[\text{BitReverse}(2j+1)] \times \Psi_{2n}^{n/2} \mod q$

7:     $A_0[2j+1] \leftarrow a[\text{BitReverse}(2j)] - a[\text{BitReverse}(2j+1)] \times \Psi_{2n}^{n/2} \mod q$

8:     $j=j+1$

9:   $i=1$

10: **When** $i < N$ //stage 1 to stage N–1

11:     $f_0, f_2 \leftarrow 0, 0$

12:     $j=0$

13:     **When** $j < n/2+4$ //any pair of butterfly operations at each stage includes the following five sub-stages

14:       **If** $4 \le j$, **then**

        //at the $(t+5)^{th}$ clock and $(t+6)^{th}$ clock, implement two rearrangement outputs at the sub-stage 4 and two storage pairs written at the sub-stage 5

15:        $t_4 \leftarrow \text{Addr }(j-4, i)$

16:        $A_i[2t_4] \leftarrow SRU_1[0]$

17:        $A_i[2t_4+1] \leftarrow f_3? SRU_1[1]: y_0$

18:       **If** $3 \le j < n/2+3$, **then** //at the $(t+4)^{th}$ clock and the $(t+5)^{th}$ clock, implement a temporary storage operation of the sub-stage 4

19:        $SRU_1[0] \leftarrow f_2? SRU_1[1]: y_0$

---

20:     $SRU_1[1] \leftarrow y_1$

21:     $f_2, f_3 \leftarrow \sim f_2, f_2$

22:     **If** $2 \leq j < n/2+2$, **then**

//at the 3$^{rd}$ clock and the 4$^{th}$ clock, implement two rearrangement outputs at the sub-stage 2 and start two processing engine operations at the sub-stage 3, to respectively obtain calculation results at the $(t+3)^{th}$ clock and the $(t+4)^{th}$ clock

23:     $k_1 \leftarrow \lfloor (j-2) \times 2^{i+1}/n \rfloor \times 2^{N-1-i}$

24:     $k_2 \leftarrow 2^{N-1-i}$

25:     $x_0 \leftarrow SRU_0[0]$

26:     $x_1 \leftarrow f_1? SRU_0[1]: d_0$

27:     $y_0 \leftarrow x_0 + x_1 \times \Psi_{2n}^{2k_1+k_2} \mod q$

28:     $y_1 \leftarrow x_0 - x_1 \times \Psi_{2n}^{2k_1+k_2} \mod q$

29:     **If** $1 \leq j < n/2+1$, **then** //at the 2$^{nd}$ clock and the 3$^{rd}$ clock, implement a temporary storage operation of the sub-stage 2

30:     $SRU_0[0] \leftarrow f_0? SRU_0[1]: d_0$

31:     $SRU_0[1] \leftarrow d_1$

32:     $f_0, f_1 \leftarrow \sim f_0, f_0$

33:     **If** $j < n/2$, **then** //at the 1$^{st}$ clock and the 2$^{nd}$ clock, implement reading of the two storage pairs at the sub-stage 1

34:     $t_0 \leftarrow \text{Addr}(j, i)$

35:     $d_0 \leftarrow A_{i-1}[2t_0]$

36:     $d_1 \leftarrow A_{i-1}[2t_0 + 1]$

37:  $j=j+1$

38: $i=i+1$

39: **Return** $A_{N-1}$

The foregoing algorithm can bring a high-efficient data flow, so that memory access and the butterfly operation in the processing engine can be simultaneously performed in pairs on the pipeline, and speeds of storage access and calculation are consistent. The processing engine can receive two pieces of input data of one butterfly unit in each clock cycle and generate two pieces of output data of one butterfly unit, and all the butterfly units at one stage are sequentially calculated by the processing engine in a preset sequence.

The data flow can process consecutive n-point target transformations by using an n/2 average processing cycle. As described above, after calculation of the first group of butterfly units is completed at the (i-1)$^{th}$ stage and the result of the first group of butterfly units is written into the memory, the 1$^{st}$ read operation may be started at the i$^{th}$ stage. Therefore, a pipeline delay of 2$^{i-1}$-1 cycles is introduced between two adjacent stages. In addition, a delay within the stage 0 is 7, and a fixed delay within a subsequent stage is 9. Therefore, a total pipeline delay of the data flow of the target transformation may be obtained by using the following formula:

$$\text{delay}=7+\sum_{i=1}^{N-1}(2^{i-1}+8)=\frac{n}{2}+8\log_2(n)-2$$

The foregoing DIT NTT/NTTP acceleration hardware structure provided in the embodiments of this disclosure may be integrated and implemented on various FPGA platforms. Table 1 below provides a comparison between the embodiments of this disclosure and the existing technology in terms of detailed information about a relevant hardware implementation result, and includes resource consumption, performance indicators (a frequency, a delay, and a throughput rate), and an area-time product as representation of hardware efficiency. BRAM and DSP in FPGA are converted into an equivalent quantity of slices to evaluate the area. The delay reflects a speed of processing an NTT operation, and a lower delay indicates a faster calculation speed. Because the embodiments of this disclosure uses a pipeline design, and an ideal application scenario thereof is processing consecutive NTT operations, an average delay of processing 100 consecutive NTT operations is provided in a comparison result. The area-time product is an indicator of considering both hardware resource consumption and a calculation speed, and a lower area-time product indicates higher hardware efficiency.

| Design | Implementation platform | $n$/log$_2$($q$) | LUT/FF/DSP/BRAM | Area | Frequency (MHz) | Average delay/single delay (Number of cycles) | Average delay/single delay ($\mu$s) | Area-time product | Throughput (Mbps) |
|---|---|---|---|---|---|---|---|---|---|
| TCAS-II 2022 | V7 | 256/16 | 2294/1645/7/3 | 2079 | 228 | 556/259 | 2.44/1.2 | 2.49k | 3413 |
| Embodiments of this specification | V7 | | **1793/2047/8/1.5** | **1804** | **322** | **318/130** | **0.99/0.4** | **0.72k** | **10153** |
| TCAS-I 2023 | UZ | 256/24 | 2700/2200/8/5 | 2750 | 333 | 526/526 | 1.58/1.58 | 4.35k | 3889 |
| TCAD 2023 | V7 | | 2466/1637/20/4.5 | 3721 | 175 | 270/270 | 1.5/1.5 | 5.58k | 4096 |
| Embodiments of this specification | V7 | | **2715/3111/16/3** | **3268** | **322** | **318/130** | **0.99/0.4** | **1.31k** | **15230** |
| TCAD 2023 | V7 | 512/14 | 1071/557/6/4 | 1737 | 248 | 1159/1159 | 4.7/4.7 | 8.17k | 1525 |
| TCAS-II 2022 | V7 | | 2178/1694/8/3 | 2156 | 234 | 1074/518 | 4.59/2.3 | 4.96k | 3117 |
| Embodiments of this specification | V7 | | **1789/2077/9/1.5** | **1907** | **322** | **582/259** | **1.81/0.81** | **1.54k** | **8903** |
| TCAD 2023 | V7 | 1024/14 | 1467/930/13/4.5 | 2683 | 189 | 1294/1294 | 6.9/6.9 | 18.51k | 2078 |
| TCAS-II 2022 | V7 | | 2151/1475/9/2.5 | 2122 | 232 | 2104/1035 | 9.07/4.5 | 9.55k | 3186 |
| TCAS-II 2024 | A7 | | 957/890/4/3 | 1351 | 240 | 1295/1295 | 5.4/5.4 | 7.29k | 2655 |
| Embodiments of this specification | V7 | | **1974/2314/10/2** | **2183** | **322** | **1102/518** | **3.42/1.61** | **3.51k** | **8913** |
| TVLSI 2024 | V7 | 1024/32 | 6900/3200/36/2 | 6125 | 150 | 1100/500 | 7.3/3.5 | 21.44k | 9362 |
| Embodiments of this specification | V7 | | **4634/4984/30/6** | **5982** | **300** | **1102/518** | **3.67/1.73** | **10.35k** | **18981** |
| TCAS-I 2023 | UV | 4096/28 | 5900/4500/12/8 | 4838 | 400 | 6158/6158 | 15.4/15.4 | 74.5k | 7447 |
| Embodiments of this specification | V7 | | **5463/5024/12/11.5** | **5494** | **249** | **4190/2069** | **16.83/8.31** | **45.65k** | **13800** |
| TCAS-II 2023 | UV | 4096/60 | 74500/61400/288/697.5 | 194600 | 250 | 951/951 | 3.8/3.8 | 739.48k | 64606 |
| TCAS-I 2023 | V7 | | 17200/17500/144/48 | 30488 | 152 | 3086/3086 | 20.37/20.37 | 621.03k | 12065 |
| TVLSI 2024 | V7 | | 22600/18000/220/16 | 33100 | 150 | 4200/2000 | 28.5/13.8 | 456.78k | 17809 |
| Embodiments of this specification | V7 | | **11856/11222/96/23.5** | **18666** | **183** | **4190/2069** | **22.9/11.31** | **211.11k** | **21733** |

Data for each existing technology used as a reference in Table 1 are from the corresponding journal of a certain year described in its design title.

It can be seen from Table 1 that, compared with a current mainstream NTT accelerator, the NTT structure provided in the embodiments of this disclosure achieves a speed increase of 4.8 times at most and an area-time product increase of 4.3 times at most.

In the embodiments of this disclosure, performance and resource utilization are well balanced, and high hardware efficiency is obtained.

The foregoing describes an entire circuit structure and operation procedure of the embodiments of this disclosure by using a DIT form as an example, and a circuit structure and operation procedure of a DIF form can be obtained by appropriately changing the circuit structure and operation procedure in a DIT form.

A topology structure of each stage in a DIF form is opposite to that in a DIT form, that is, an $i^{th}$ stage in a DIF form corresponds to an $(N-1-i)^{th}$ stage in a DIT form. Therefore, the acceleration hardware structure in a DIF form can be obtained by horizontally reversing the acceleration hardware structure in a DIT form shown in FIG. 1.

The first stage, stage 0, in a DIF form corresponds to the stage N-1 in FIG. 1, and therefore has the same hardware structure as the circuit part at the intermediate stage in FIG. 1 and performs the same transformation operation.

The last stage, stage N-1, in a DIF form corresponds to the stage 0 in FIG. 1. Therefore, a circuit part at the stage N-1 includes only an $(N-1)^{th}$-order controller and an $(N-1)^{th}$-order processing engine without a rearrangement unit. Correspondingly, a transformation operation of the $(N-1)^{th}$ stage includes: sequentially reading, by the $(N-1)^{th}$-order controller, n/2 data pairs from n/2 addresses in a memory at a $(N-2)^{th}$ stage; and sequentially performing, by the $(N-1)^{th}$-order processing engine, a radix-2 butterfly operation on the n/2 data pairs, to sequentially output n/2 result pairs.

At each intermediate stage in the DIF form, a circuit part is the same as that in a DIT form in FIG. 1, but i in the foregoing calculation formulas is replaced with N-i-1 in terms of control logic. For example, in a transformation operation of an $i^{th}$ stage in a DIF form, n/2 addresses are sequentially evenly divided into $2^i$ groups, and the second read address and the second write address in the foregoing any pair of butterfly operation processing are respectively the first read address plus 2 to the power of N-i-2 and the first write address plus 2 to the power of N-i-2.

In addition, a processing engine in a DIF form performs modular multiplication after modular addition and modular subtraction.

Because the pipeline structure provided in the embodiments of this disclosure can generate two outputs in each cycle, based on the embodiments of this disclosure, a pipelined polynomial multiplier may be implemented. Only two polynomials need to be input to two parallel NTTP units, and a result is transferred to one INTTP unit by two data pointwise multiplication units that are implemented by using a Barrett algorithm, to obtain a polynomial multiplication result.

FIG. 6 is a schematic structural diagram of a polynomial multiplier according to an embodiment. The polynomial multiplier receives an n-point first input sequence and an n-point second input sequence, and outputs an n-point polynomial multiplication output sequence.

As shown in FIG. 6, the polynomial multiplier includes a first transformation module 61, a second transformation module 62, a pointwise multiplication hardware module 63, and a third transformation module 64, wherein the first transformation module 61, the second transformation module 62, and the third transformation module 64 each may be implemented by using the foregoing acceleration hardware according to the embodiments of this disclosure.

The first transformation module 61 may be acceleration hardware for NTTP in a DIF form according to the embodiments of this disclosure, and performs NTTP in a DIF form on a first input sequence, that is, a coefficient sequence of a polynomial a(x), to output a first output sequence a'.

The second transformation module 62 may alternatively be acceleration hardware for NTTP in a DIF form according to the embodiments of this disclosure and have a same structure as the first transformation module 61, and performs NTTP in a DIF form on a second input sequence, that is, a coefficient sequence of a polynomial b(x), to output a second output sequence b'.

The pointwise multiplication hardware module 63 may be configured to perform pointwise multiplication on the first output sequence a' and the second output sequence b', to output a third output sequence c'. When a pipeline architecture is used, the pointwise multiplication hardware module may be implemented by using a Barrett algorithm, and pointwise multiplication is separately performed on two pieces of data output in each clock cycle by the first transformation module 61 and the second transformation module 62.

The third transformation module 64 may be acceleration hardware (for example, as shown in FIG. 1) for INTTP in a DIT form according to the embodiments of this disclosure, and performs INTTP on the third output sequence c' in a DIT form, to output an n-point polynomial multiplication output sequence, that is, a coefficient sequence of a polynomial c(x).

Because the DIF form requires an input sequence in a natural order, to obtain an output sequence in a bit-reversed order, and the DIT form just requires an input sequence in a bit-reversed order, to obtain an output sequence in a natural order, in the foregoing polynomial multiplier, processing of inverting a bit order is omitted, thereby improving operation efficiency.

The polynomial multiplier according to the embodiments of this disclosure may be applied to various other devices, for example, a post-quantum password hardware accelerator.

A person skilled in the art is to be aware that in the foregoing one or more examples, the functions described in the embodiments of the present invention may be implemented by hardware, software, firmware, or any combination thereof. When implemented by using software, the functions may be stored in a computer-readable medium or transmitted as one or more instructions or code in the computer-readable medium.

The foregoing specific implementations further describe the objectives, technical solutions, and beneficial effects of the present invention in detail. The foregoing descriptions are merely specific implementations of the present invention, but are not intended to limit the protection scope of the present invention. Any modification, equivalent replacement, or improvement made based on the technical solutions of the present invention is to be fall within the protection scope of the present invention.

**Claims**

1. A method for performing a target transformation by using acceleration hardware, wherein the target transformation comprises transformation operations of N stages, the acceleration hardware comprises N circuit parts corresponding to the N stages, wherein an $i^{th}$ circuit part corresponding to any $i^{th}$ stage other than a first stage and a last stage comprises a controller, a processing engine, a memory, a first rearrangement unit, and a second rearrangement unit, and the transformation operation of the $i^{th}$ stage comprises:

    respectively reading, by the controller, a first data pair and a second data pair from a first read address and a second read address in the memory at an $(i-1)^{th}$ stage;
    performing, by the first rearrangement unit, a first rearrangement operation on the first data pair and the second data pair, to sequentially output a third data pair and a fourth data pair;
    sequentially performing, by the processing engine, a radix-2 butterfly operation on the third data pair and the fourth data pair, to sequentially output a first result pair and a second result pair;
    performing, by the second rearrangement unit, a second rearrangement operation on the first result pair and the second result pair, to obtain a fifth data pair and a sixth data pair; and
    respectively writing, by the controller, the fifth data pair and the sixth data pair into a first write address and a second write address in the memory at the $i^{th}$ stage.

2. The method according to claim 1, wherein the target transformation is performed for an n-point input sequence, wherein n is 2 to the power of N, the memory at the $i^{th}$ stage stores, in pairs by using consecutive n/2 addresses, n results obtained through the transformation operation of the $i^{th}$ stage performed on the n-point input sequence, and values of the first read address and the second read address are respectively the same as values of the first write address and second write address.

3. The method according to claim 2, wherein the second read address and the second write address are respectively the first read address and the first write address plus 2 to the power of i-1;
   or
   the second read address and the second write address are respectively the first read address and the first write address plus 2 to the power of N-i-2.

4. The method according to claim 2, wherein in the transformation operation of the $i^{th}$ stage, the n/2 addresses are sequentially evenly divided into $2^{N-i-1}$ groups, or $2^i$ groups; and the transformation operation of the $i^{th}$ stage further comprises:

    respectively reading, by the controller, data from a third read address and a fourth read address in the memory at the $(i-1)^{th}$ stage in two consecutive clock cycles after reading the second data pair, wherein
    if the second read address is a last address in the group, the third read address is the second read address plus 1;
    or if the second read address is not a last address in the group, the third read address is the first read address plus 1; and
    when the n/2 addresses are sequentially evenly divided into the $2^{N-i-1}$ groups, the fourth read address is the third read address plus 2 to the power of i-1; or when the n/2 addresses are sequentially evenly divided into the $2^i$ groups, the fourth read address is the third read address plus 2 to the power of N-i-2.

5. The method according to claim 1, wherein the respectively reading, by the controller, a first data pair and a second data pair from a first read address and a second read address in the memory at an $(i-1)^{th}$ stage comprises:

reading, by the controller in a first clock cycle, the first data pair from the first read address and inputting the first data pair to the first rearrangement unit; and reading, by the controller in a second clock cycle subsequent to the first clock cycle, the second data pair from the second read address and inputting the second data pair to the first rearrangement unit.

6. The method according to claim 5, wherein the sequentially performing, by the processing engine, a radix-2 butterfly operation on the third data pair and the fourth data pair comprises:

starting, by the processing engine in a third clock cycle, to perform the radix-2 butterfly operation on the third data pair, and after t clock cycles, outputting the obtained first result pair to the second rearrangement unit; and starting, by the processing engine in a fourth clock cycle subsequent to the third clock cycle, to perform the radix-2 butterfly operation on the fourth data pair, and after the t clock cycles, outputting the obtained second result pair to the second rearrangement unit.

7. The method according to claim 6, wherein the respectively writing, by the controller, the fifth data pair and the sixth data pair into a first write address and a second write address in the memory at the $i^{th}$ stage comprises:

writing, by the controller, the fifth data pair into the first write address in a $(t+5)^{th}$ clock cycle; and writing, by the controller, the sixth data pair into the second write address in a $(t+6)^{th}$ clock cycle.

8. The method according to claim 1, wherein the performing, by the first rearrangement unit, a first rearrangement operation on the first data pair and the second data pair comprises:

receiving, by the first rearrangement unit, the first data pair in a first clock cycle; receiving, by the first rearrangement unit, the second data pair in a second clock cycle, and temporarily storing the first data pair; outputting, by the first rearrangement unit in a third clock cycle subsequent to the second clock cycle, a first piece of data in the first data pair and a first piece of data in the second data pair as the third data pair, and temporarily storing a second piece of data in the second data pair; and outputting, by the first rearrangement unit in a fourth clock cycle subsequent to the third clock cycle, a second piece of data in the first data pair and the second piece of data in the second data pair as the fourth data pair.

9. The method according to claim 6, wherein the performing, by the second rearrangement unit, a second rearrangement operation on the first result pair and the second result pair comprises:

receiving, by the second rearrangement unit in a $(t+3)^{th}$ clock cycle, the first result pair; receiving, by the second rearrangement unit in a $(t+4)^{th}$ clock cycle, the second result pair, and temporarily storing the first result pair; outputting, by the second rearrangement unit in a $(t+5)^{th}$ clock cycle, a first result in the first result pair and a first result in the second result pair as a fifth data pair, and temporarily storing a second result in the second result pair; and outputting, by the second rearrangement unit in a $(t+6)^{th}$ clock cycle, a second result in the first result pair and the second result in the second result pair as a sixth data pair.

10. The method according to claim 2, wherein a $0^{th}$ circuit part corresponding to the first stage among the N circuit parts comprises a $0^{th}$-order controller, a $0^{th}$-order processing engine, and a $0^{th}$-order memory, and a transformation operation of a $0^{th}$ stage comprises:

sequentially performing, by the $0^{th}$ processing engine, a radix-2 butterfly operation separately on n/2 input pairs formed by every two pieces of neighboring data in the n-point input sequence sorted in a reverse bit order, to sequentially output n/2 result pairs; and sequentially writing, by the $0^{th}$-order controller, the n/2 result pairs to consecutive n/2 addresses in the $0^{th}$-order memory.

11. The method according to claim 2, wherein an $(N-1)^{th}$ circuit part corresponding to the last stage among the N circuit parts comprises an $(N-1)^{th}$-order controller and an $(N-1)^{th}$-order processing engine, and a transformation operation of the $(N-1)^{th}$ stage comprises:

sequentially reading, by the $(N-1)^{th}$-order controller, n/2 data pairs from n/2 addresses in a memory at a $(N-2)^{th}$ stage; and

sequentially performing, by the $(N-1)^{th}$-order processing engine, a radix-2 butterfly operation on the n/2 data pairs, to sequentially output n/2 result pairs.

12. The method according to claim 1, wherein a $0^{th}$ circuit part corresponding to the first stage or an $(N-1)^{th}$ circuit part corresponding to the last stage among the N circuit parts has a same hardware structure as the $i^{th}$ circuit part and performs a same transformation operation as the $i^{th}$ circuit part.

13. The method according to claim 1, wherein the target transformation is fast Fourier transform FFT, inverse fast Fourier transform IFFT, number-theoretic transform NTT, inverse number-theoretic transform INTT, NTTP transform obtained by merging preprocessing and NTT in negative wrapped convolution NWC, or INTTP transform obtained by merging INTT and postprocessing in NWC; and

the transformation operations of the N stages are performed in a decimation-in-time DIT form or in a decimation-in-frequency DIF form.

14. Acceleration hardware for performing a target transformation, wherein the target transformation comprises transformation operations of N stages, the acceleration hardware comprises N circuit parts corresponding to the N stages, wherein an $i^{th}$ circuit part corresponding to any $i^{th}$ stage other than a first stage and a last stage comprises a controller, a processing engine, a memory, a first rearrangement unit, and a second rearrangement unit; and in the transformation operation of the $i^{th}$ stage:

the controller is configured to respectively read a first data pair and a second data pair from a first read address and a second read address in the memory at an $(i-1)^{th}$ stage;

the first rearrangement unit is configured to perform a first rearrangement operation on the first data pair and the second data pair, to sequentially output a third data pair and a fourth data pair;

the processing engine is configured to sequentially perform a radix-2 butterfly operation on the third data pair and the fourth data pair, to sequentially output a first result pair and a second result pair;

the second rearrangement unit is configured to perform a second rearrangement operation on the first result pair and the second result pair, to obtain a fifth data pair and a sixth data pair; and

the controller is further configured to respectively write the fifth data pair and the sixth data pair into a first write address and a second write address in the memory at the $i^{th}$ stage.

15. The acceleration hardware according to claim 14, wherein the first rearrangement unit comprises a first register, a second register, a first multiplexer, a second multiplexer, and a multiplex control portion, wherein

one input terminal of the first multiplexer and one input terminal of the second multiplexer both receive a first piece of data in a currently read data pair,

the first register receives and temporarily stores a second piece of data in the currently read data pair, and an output terminal of the first register is coupled to an other input terminal of the first multiplexer and an other input terminal of the second multiplexer,

an output terminal of the first multiplexer is coupled to an input terminal of the second register,

the second register outputs a first piece of data in a data pair currently obtained through rearrangement, and the second multiplexer outputs a second piece of data in the data pair currently obtained through rearrangement, and

the multiplex control portion is configured to control the first multiplexer and the second multiplexer to alternately select one of two inputs thereof as an output.

16. The acceleration hardware according to claim 15, wherein the multiplex control portion comprises a third register, a fourth register, and an inverter, wherein

an output terminal of the third register is coupled to a control terminal of the first multiplexer, an input terminal of the fourth register, and an input terminal of the inverter,

an output terminal of the fourth register is coupled to a control terminal of the second multiplexer, and

an output terminal of the inverter is coupled to an input terminal of the third register.

17. The acceleration hardware according to claim 14, wherein the first rearrangement unit and the second rearrangement unit have a same hardware structure.

**18.** The acceleration hardware according to claim 14, wherein the processing engine comprises a modular multiplication unit, and the modular multiplication unit comprises a first integer multiplier, a second integer multiplier, and a third integer multiplier, wherein the first integer multiplier is implemented by using a digital signal processor DSP, and the second integer multiplier and the third integer multiplier are implemented by using a look-up table LUT.

**19.** A polynomial multiplier, receiving an n-point first input sequence and an n-point second input sequence, and outputting an n-point polynomial multiplication output sequence, wherein the polynomial multiplier comprises a first transformation module, a second transformation module, a pointwise multiplication hardware module, and a third transformation module, wherein the first transformation module, the second transformation module, and the third transformation module each comprise the acceleration hardware according to claim 14;

the first transformation module is configured to perform NTTP on the first input sequence in a DIF form, to output a first output sequence;
the second transformation module is configured to perform NTTP on the second input sequence in a DIF form, to output a second output sequence;
the pointwise multiplication hardware module is configured to perform pointwise multiplication on the first output sequence and the second output sequence, to output a third output sequence; and
the third transformation module is configured to perform INTTP on the third output sequence in a DIT form, to output the n-point polynomial multiplication output sequence.

Data signal

Control signal (read/write/enable)

FIG. 1

S21

A controller respectively reads a first data pair and a second data pair from a first read address and a second read address in a memory at an $(i-1)^{th}$ stage

S22

A first rearrangement unit performs a first rearrangement operation on the first data pair and the second data pair, to sequentially output a third data pair and a fourth data pair

S23

A processing engine sequentially performs a radix-2 butterfly operation on the third data pair and the fourth data pair, to sequentially output a first result pair and a second result pair

S24

A second rearrangement unit performs a second rearrangement operation on the first result pair and the second result pair, to obtain a fifth data pair and a sixth data pair

S25

The controller respectively writes the fifth data pair and the sixth data pair into a first write address and a second write address in a memory at an $i^{th}$ stage

FIG. 2

FIG. 3

Multiplex control portion

FIG. 4

⊗ LUT multiplier
⊗ DSP multiplier
≫ Right shifting unit
⊞ Modular adder
⊟ Modular subtracter

FIG. 5

FIG. 6

Europäisches
Patentamt

European
Patent Office

Office européen
des brevets

# EUROPEAN SEARCH REPORT

**Application Number**

EP 26 15 1354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG ZIHANG ET AL: "A Scalable and Efficient NTT/INTT Architecture Using Group-Based Pairwise Memory Access and Fast Interstage Reordering", , 9 October 2024 (2024-10-09), XP093397703, DOI: 10.1109/tvlsi.2024.3465010 Retrieved from the Internet: URL:https://ieeexplore.ieee.org/abstract/document/10710157> * abstract * * figures 1-6 * * Algorithm 1 * * Section II-B, III, and IV * & WANG ZIHANG ET AL: "A Scalable and Efficient NTT/INTT Architecture Using Group-Based Pairwise Memory Access and Fast Interstage Reordering", IEEE TRANSACTIONS ON VERY LARGE SCALE INTEGRATION (VLSI) SYSTEMS, vol. 33, no. 2, 9 October 2024 (2024-10-09), pages 588-592, XP093344676, PISCATAWAY, NJ, USA ISSN: 1063-8210, DOI: 10.1109/TVLSI.2024.3465010 ----- -/-- | 1-19 | INV. G06F7/72 G06F17/14 G06F17/16 |

**TECHNICAL FIELDS SEARCHED (IPC)**

G06F

The present search report has been drawn up for all claims

| Place of search | Date of completion of the search | Examiner |
|---|---|---|
| Munich | 13 May 2026 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 26 15 1354

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Fritzmann Tim: "Towards Secure Coprocessors and Instruction Set Extensions for Acceleration of Post-Quantum Cryptography", mediaTUM, 22 December 2022 (2022-12-22), pages 1-196, XP093134622, München Retrieved from the Internet: URL:https://mediatum.ub.tum.de/1650057 [retrieved on 2024-02-26] * figure 4.5 * * Section 4.3.1 * ----- | 1-19 | |
| A | KRIEGER FLORIAN ET AL: "OpenNTT - An Automated Toolchain for Compiling High-Performance NTT Accelerators in FHE", PROCEEDINGS OF THE 3RD WORKSHOP ON SERVERLESS SYSTEMS, APPLICATIONS AND METHODOLOGIES ACMPUB27, NEW YORK, NY, USA, 27 October 2024 (2024-10-27), pages 1-9, XP059886008, DOI: 10.1145/3676536.3697123 ISBN: 9798400715570 * figures 2, 3 * * Sections 3.1 and 3.2 * ----- | 1-19 | TECHNICAL FIELDS SEARCHED (IPC) |
| A | Satriawan Ardianto ET AL: "A Complete Beginner Guide to the Number Theoretic Transform (NTT)", , 1 May 2024 (2024-05-01), XP093209645, Retrieved from the Internet: URL:https://eprint.iacr.org/2024/585.pdf * the whole document * ----- | 1-19 | |

The present search report has been drawn up for all claims

| Place of search | Date of completion of the search | Examiner |
|---|---|---|
| Munich | 13 May 2026 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)